# FASCICULE DE BREVET EUROPEEN

(11) **EP 0 937 681 B1**
(45) Date de publication et mention de la délivrance du brevet: **05.12.2001**
(21) Numéro de dépôt: 99400393.7
(22) Date de dépôt: 18.02.1999
(51) Int. Cl.: C01B 31/18

(54) **Procédé et installation pour la production combinée d'un mélange de synthèse d'amomniac et de monoxyde de carbone**
Verfahren und Anlage zur kombinierter Herstellung einer Ammoniak-Synthesemischung und Kohlenmonoxyd
Process and installation for the combined production of a ammoniac synthesis mixture and carbon monoxide

(30) Priorité: 20.02.1998 FR 9802099
(43) Date de publication de la demande: 25.08.1999
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: Billy, Jean, 94420 Plessis Trevise (FR); Fauroux, Danièle, 94450 Limeil Brevannes (FR)
(74) Mandataire: Le Moenner, Gabriel

(56) Documents cités:
- EP-A- 0 092 770
- EP-A- 0 676 373
- DE-A- 3 801 712

## Description

La présente invention concerne la production combinée d'un mélange de synthèse d'ammoniac (N₂ + 3H₂) et de monoxyde de carbone ainsi qu'une installation pour une telle production combinée.

Dans la technique classique, du monoxyde de carbone est obtenu lors du reformage à la vapeur ou de l'oxydation partielle d'hydrocarbures. Du monoxyde de carbone de haute pureté peut être produit sur de telles unités en employant des méthodes de purification classiques. Celles-ci comprennent des procédés cryogéniques comme la condensation partielle ou le lavage au méthane liquide ; d'autres procédés employés pour la purification sont les procédés d'absorption, comme le procédé COSORB de Tenneco Chemicals, ou d'adsorption (Pressure Swing Adsorption ou PSA).

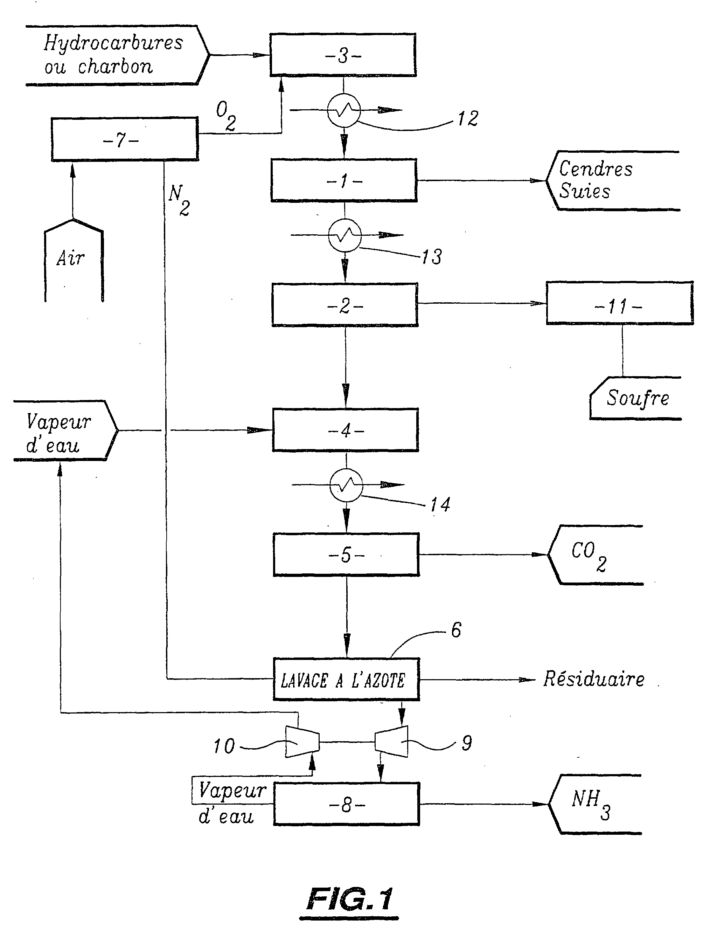

En particulier, du monoxyde de carbone est produit lors de la préparation du mélange de synthèse utilisé pour la synthèse d'ammoniac, lorsque l'hydrogène est obtenu par oxydation partielle d'hydrocarbures ou de charbon. Un tel procédé classique de préparation du mélange de synthèse est illustré sur le diagramme de la figure 1 et est décrit sommairement ci-dessous :

Après l'élimination des suies, en 1, et celle du sulfure d'hydrogène, en 2, du mélange issu de l'étape d'oxydation partielle d'hydrocarbures ou de charbon, en 3, l'étape 4 de conversion du CO transforme la majeure partie du CO présent, sous l'action de vapeur d'eau, en dioxyde de carbone (CO₂) en produisant de l'hydrogène. Après l'élimination de CO₂ par absorption, en 5, le mélange gazeux est soumis à une étape cryogénique 6 de lavage à l'azote qui fournit le mélange de synthèse (N₂+3H₂), ainsi qu'un gaz résiduaire contenant essentiellement du monoxyde de carbone, de l'hydrogène, du méthane et de l'azote.

On a également représenté à la Figure 1 les autres opérations de la synthèse d'ammoniac : distillation d'air, en 7, fournissant l'oxygène nécessaire à l'oxydation partielle 3 et l'azote nécessaire pour le lavage 6 ; synthèse de NH₃ proprement dite en 8, à partir du mélange de synthèse issu de l'étape 6, comprimé en 9 ; détente de vapeur d'eau dans une turbine 10 pour entraîner le compresseur 9 ; traitement du sulfure d'hydrogène issu de l'étape 2, en 11, par un procédé Claus, pour produire du soufre ; et divers échangeurs de chaleur 12 à 14.

Dans la technique antérieure, le gaz résiduaire de l'étape 6 de lavage à l'azote était brûlé.

Un procédé de production de monoxyde de carbone, qui permet dans le cas particulier ci-dessus, de valoriser le gaz résiduaire riche en monoxyde de carbone est connu du document EP-A-0 092 770. Le gaz résiduaire est alors utilisé comme mélange d'alimentation du procédé de production de monoxyde de carbone. Un des procédés décrit dans cette demande de brevet comporte une étape de lavage au méthane pour séparer l'hydrogène d'un mélange comprenant également du méthane, du monoxyde de carbone et de l'azote. Le condensat ainsi produit est distillé dans une première colonne de distillation pour séparer le méthane du reste du mélange. Le gaz de tête de cette première colonne, contenant principalement le monoxyde de carbone, est distillé dans une deuxième colonne de distillation pour enlever l'azote et l'hydrogène restant, le monoxyde de carbone pur étant soutiré de la cuve de cette colonne.

Le monoxyde de carbone sert ensuite comme réfrigérant pour les condenseurs de tête de la première et de la deuxième colonne.

Un procédé de production de monoxyde de carbone à partir du gaz résiduaire riche en monoxyde de carbone issu d'une unité de lavage à l'azote est également décrit dans la demande de brevet EP-A-0 676 373.

Jusqu'à présent, du monoxyde de carbone pouvait donc être produit en utilisant le gaz résiduaire d'une unité de lavage à l'azote comme mélange d'alimentation d'une unité séparée de production de monoxyde de carbone, en valorisant ainsi ce résiduaire qui était simplement brûlé auparavant.

La présente invention a pour objectif de fournir un procédé pour la production de monoxyde de carbone avec une consommation d'énergie et un coût d'investissement réduits.

Elle a aussi pour objectif de fournir du monoxyde de carbone présentant une pureté élevée convenable pour d'autres productions.

Elle a encore pour objectif de fournir un tel procédé qui puisse être intégré à la purification de l'hydrogène destiné à la production du mélange de synthèse d'ammoniac.

L'invention a également pour objectif de fournir une installation pour la mise en oeuvre d'un tel procédé.

A cet effet, la présente invention a pour objet un procédé de production combinée d'un mélange de synthèse d'ammoniac et de monoxyde de carbone, du type comprenant la production d'un mélange de synthèse d'ammoniac (N₂ + 3H₂) à partir d'une part, d'hydrogène sous haute pression purifié, dans une étape finale, par lavage à l'azote dans une colonne de lavage et d'autre part, d'un courant d'azote à haute pression,
caractérisé par les étapes consistant à :
- soutirer une première fraction liquide en cuve de ladite colonne de lavage à l'azote, qui est riche en monoxyde de carbone et pauvre en constituants résiduels dont l'azote, l'hydrogène et le méthane, et une seconde fraction liquide à un emplacement intermédiaire entre cuve et tête de ladite colonne de lavage, qui est riche en azote et pauvre en monoxyde de carbone,
- purifier, par voie cryogénique, le monoxyde de carbone à partir de ladite première fraction par une première séparation sous moyenne pression dans une colonne de stripage séparant l'hydrogène résiduel en tête, et une seconde distillation sous basse pression dans une colonne de distillation séparant le monoxyde de carbone et l'azote résiduel en tête à partir du mélange de cuve provenant de la première séparation dans la colonne de stripage.

L'invention a également pour objet une installation pour la production combinée d'un mélange de synthèse d'ammoniac et de monoxyde de carbone, du type comprenant des moyens cryogéniques de séparation des constituants d'un mélange gazeux contenant essentiellement de l'hydrogène et du monoxyde de carbone ainsi que d'autres constituants dont l'azote et le méthane, dont un échangeur de chaleur, une source adaptée pour fournir un courant d'azote à haute pression et une colonne de lavage à l'azote liquide, caractérisé en ce que :
- la colonne de lavage à l'azote comprend des moyens de soutirage de liquide à un emplacement intermédiaire entre cuve et tête de ladite colonne, et
- l'installation comprend en outre
   . une colonne de stripage sous moyenne pression munie de moyens de rebouillage, produisant en cuve une fraction liquide riche en monoxyde de carbone et en tête de l'hydrogène,
   . une conduite munie de moyens de détente, pour amener la fraction liquide de cuve de la colonne de lavage à l'azote à ladite colonne de stripage,
   . une colonne de distillation sous basse pression munie de moyens de rebouillage et d'un condenseur de tête, produisant en cuve une fraction riche en méthane et en tête une fraction riche en monoxyde de carbone,
   . une conduite munie de moyens de détente pour amener ladite fraction liquide de cuve de la colonne de stripage à un emplacement intermédiaire de la colonne de distillation.

Les inventeurs ont mis en évidence, que l'on pouvait produire du monoxyde de carbone de pureté convenable, non pas par valorisation du gaz résiduaire issu de l'étape classique finale de purification de l'hydrogène en vue de la production d'un mélange de synthèse d'ammoniac, mais parallèlement à la production de ce mélange de synthèse d'ammoniac, par traitement direct du liquide obtenu en cuve de ladite étape de lavage à l'azote.

Ils ont ainsi mis en évidence que l'on pouvait produire du monoxyde de carbone, lors de la purification cryogénique de l'hydrogène destiné à la production d'ammoniac, à partir du résiduaire issu du lavage à l'azote, sans qu'il soit nécessaire de le comprimer et de le réchauffer comme c'était le cas dans la technique antérieure.

Les inventeurs ont montré, d'une manière inattendue, qu'en dégradant le rendement (matière) en monoxyde de carbone à l'étape initiale de sa purification, on pouvait obtenir au final du monoxyde de carbone de pureté convenable à ses applications classiques avec une économie en énergie et en coût d'investissement.

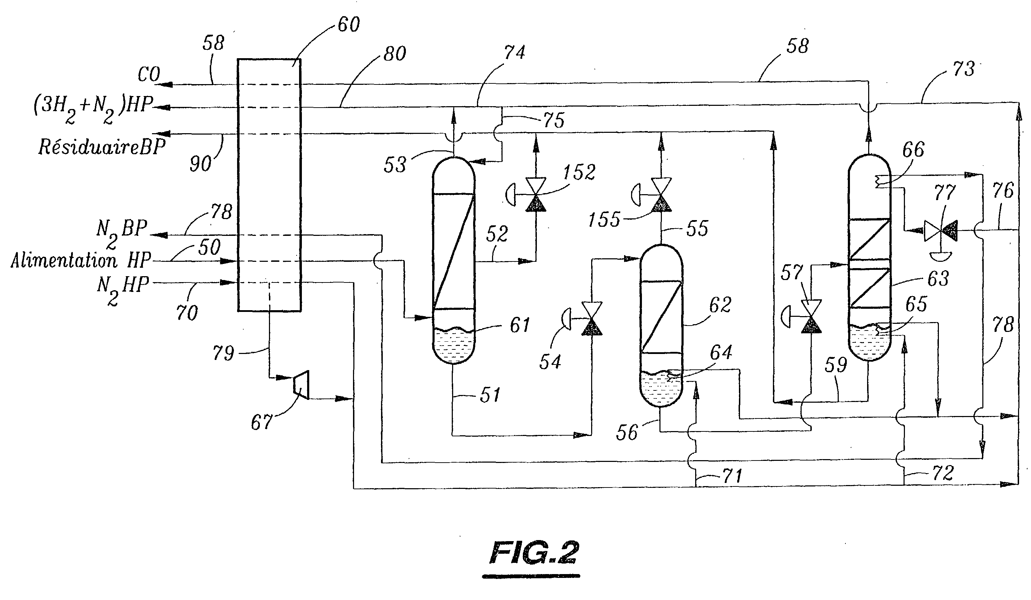

Un exemple de réalisation de l'invention va maintenant être décrit en référence à la figure 2 annexée qui schématise une installation de production combinée d'un mélange de synthèse d'ammoniac et de monoxyde de carbone conforme à l'invention.

L'installation représentée à la figure 2 remplace le bloc 6 de la figure 1.

Elle est destinée d'une part, à la purification d'hydrogène à partir d'un mélange gazeux d'alimentation 50 contenant essentiellement de l'hydrogène et du monoxyde de carbone ainsi que d'autres constituants dont le méthane et l'azote, pour l'obtention d'un mélange de synthèse utile pour la production d'ammoniac et d'autre part, à la production de monoxyde de carbone de pureté élevée (au moins 98 %) directement à partir du résiduaire issu de la purification de l'hydrogène précédente.

La composition du mélange d'alimentation de l'installation 6 peut varier selon le type de procédé de génération de gaz de synthèse d'ammoniac mis en oeuvre (réformage à la vapeur, oxydation partielle, etc.).

Les pressions dont il est question ci-dessous sont des pressions absolues.

L'installation 6 comprend essentiellement un échangeur de chaleur 60 du type indirect à contre-courant, une colonne de lavage à l'azote liquide 61, une colonne de stripage 62 équipée d'un rebouilleur de cuve 64, une colonne de distillation 63 équipée d'un rebouilleur de cuve 65 et d'un condenseur de tête 66 ainsi qu'une turbine de détente 67.

L'installation fonctionne de la façon suivante :

Le mélange gazeux d'alimentation 50, disponible sous une haute pression comprise entre 15 bars et 70 bars à la sortie du bloc 5, est refroidi jusqu'à une température comprise entre -180°C et -190°C dans l'échangeur de chaleur 60.

Ce mélange est alors amené en cuve de la colonne de lavage 61, à l'entrée de laquelle il est à l'état partiellement condensé.

Il est ensuite séparé dans la colonne de lavage 61 en une fraction liquide 51 recueillie en cuve de colonne et une fraction gazeuse.

La fraction gazeuse, essentiellement constituée d'hydrogène, est lavée dans la colonne 61 munie de plateaux ou de garnissage (non représenté) avec de l'azote liquide 75 envoyé sous la haute pression en tête de colonne et quitte celle-ci en tête dans le flux 53 constitué essentiellement d'hydrogène.

La fraction d'hydrogène 53 présente une pureté qui est compatible avec une utilisation dans la synthèse d'ammoniac.

A cette fin, elle est additionnée d'un appoint d'azote 74 pour former le mélange de synthèse 80 (N₂ +3H₂) et est finalement réchauffée à la température ambiante dans l'échangeur de chaleur 60.

Par ailleurs, une fraction liquide 52 est soutirée à un emplacement intermédiaire entre cuve et tête de la colonne 61. Cette fraction est riche en azote et relativement pauvre en monoxyde de carbone.

La fraction 52 est détendue à une basse pression (typiquement de 1,5 bar) dans une vanne de détente 152, puis vaporisée et réchauffée à température ambiante dans l'échangeur de chaleur 60 pour être dirigée vers un réseau résiduaire 90 ("fuel gas").

Le monoxyde de carbone est quant à lui purifié à partir de la fraction liquide 51 recueillie en cuve de la colonne 61.

La fraction 51 est pauvre en azote et riche en monoxyde de carbone et contient également d'autres constituants présents dans le mélange d'alimentation initial 70. Elle contient typiquement au moins 90 % de la quantité de monoxyde de carbone contenue dans le mélange gazeux d'alimentation 50, de l'hydrogène et de l'azote résiduels ainsi que d'autres constituants dont le méthane.

La fraction 51 est la source directe de la production associée de monoxyde de carbone.

Le monoxyde de carbone est purifié dans les deux étapes suivantes :

La fraction liquide 51 est tout d'abord débarrassée de l'hydrogène résiduel qui y est dissous, par séparation sous moyenne pression (typiquement 10 bars) dans la colonne de stripage 62 après détente à l'aide d'une vanne de détente 54.

L'hydrogène séparé est recueilli en tête de la colonne 62 dans le flux 55 qui, après détente à la basse pression dans une vanne de détente 155, est réchauffé en 60 et dirigé vers le réseau résiduaire 90.

Une fraction liquide 56 constituée essentiellement de monoxyde de carbone et contenant également l'azote résiduel et les autres constituants présents initialement dans le mélange d'alimentation 50 dont le méthane, est recueillie en cuve de la colonne 62.

La fraction 56 est amenée à la basse pression, après détente à l'aide d'une vanne 57, à une colonne de distillation 63 à un emplacement intermédiaire de ladite colonne.

Après séparation dans la colonne 63, une fraction gazeuse 58 riche en monoxyde de carbone et contenant également l'azote résiduel, est recueillie en tête de colonne. Le rapport N₂/CO de cette fraction n'excède pas 2 %.

Cette fraction 58 est réchauffée à température ambiante dans l'échangeur de chaleur 60 et fournit le monoxyde de carbone recherché avec une pureté compatible avec son utilisation dans d'autres productions classiques.

Une fraction liquide 59 riche en méthane est par ailleurs recueillie en cuve de la colonne 63 et est dirigée, après réchauffement en 60, vers le réseau résiduaire 90.

La puissance de séparation est assurée par un cycle azote ouvert comme décrit ci-dessous :

De l'azote à haute pression 70, typiquement à la pression du mélange d'alimentation 50, est refroidi dans l'échangeur de chaleur 60.

Une partie de cet azote haute pression, prélevée dans les flux 71 et 72, est condensée dans les rebouilleurs de cuve 64 et 65 des colonnes de séparation 62 et 63 respectivement.

La plus grande partie de cet azote liquéfié 73 alimente la colonne de lavage 61 par un flux 75 introduit en tête de ladite colonne.

Une autre partie 74 constitue l'appoint d'azote pour former le mélange de synthèse 80 (N₂ + 3H₂) par mélange avec le gaz de tête 53 de la colonne 61.

Une fraction faible de cet azote liquéfié 76 est par ailleurs détendue à l'aide d'une vanne de détente 77 et vaporisée en basse pression dans le condenseur de tête 66 de la colonne de séparation 63.

L'azote à basse pression (typiquement 2 bars) sortant du condenseur 66 et réchauffé pour former le flux 78, peut alimenter un réseau d'azote basse pression ou peut être recomprimé pour être recyclé en 70 dans le procédé.

Le bilan frigorifique de l'installation 6 est assuré par détente dans une turbine 67 d'un courant d'azote à haute pression 79 partiellement refroidi dans l'échangeur 60 ou éventuellement par vaporisation d'un appoint externe d'azote liquide.

Selon une variante de réalisation de l'invention, les séparations sont assurées au moyen d'un cycle ouvert dont le fluide est du monoxyde de carbone.

Dans ce cas, on utilise le monoxyde de carbone produit, après recompression d'un courant prélevé sur la fraction 58, pour alimenter les rebouilleurs de cuve 64 et 65 ainsi que le condenseur de tête 66 des colonnes de séparation 62 et 63 respectivement d'une manière analogue à ce qui a été décrit plus haut pour les flux d'azote 71, 72, 76.

Le procédé conforme à la présente invention permet de réduire la consommation en énergie et le coût d'investissement par rapport aux procédés connus.

Il prévoit, en effet, la production de monoxyde de carbone parallèlement à la purification finale de l'hydrogène pour la production du mélange de synthèse d'ammoniac, c'est-à-dire directement à partir du flux résiduaire issu de l'étape de lavage à l'azote dans une même boîte froide. Le flux résiduaire de cette étape de lavage à l'azote n'a ainsi pas besoin d'être réchauffé, comprimé et refroidi à basse température avant la purification du monoxyde de carbone comme dans l'état de la technique mentionné plus haut.

En outre, le procédé conforme à l'invention ne prévoit pas de séparation de l'azote dans une étape de distillation indépendante mais un soutirage intermédiaire lors du lavage à l'azote liquide.

Il a ainsi été mis en évidence, qu'en dégradant le rendement en monoxyde de carbone (perte lors du soutirage intermédiaire) au niveau de l'étape initiale de lavage à l'azote, on pouvait produire à la fois de l'hydrogène de pureté convenable pour la production d'un mélange de synthèse d'ammoniac et du monoxyde de carbone avec une pureté d'au moins 98 %, convenable pour la plupart des applications auxquelles il est classiquement destiné.

L'énergie de production de monoxyde de carbone et les caractéristiques de ce dernier ont été évaluées pour le procédé de l'invention par comparaison avec le procédé connu, selon les schémas suivants :

Schéma 1 selon la technique connue :
- production d'un mélange de synthèse d'ammoniac par lavage à l'azote liquide, dans une première boîte froide, avec comme sous-produit un résiduaire riche en monoxyde de carbone,
- production de monoxyde de carbone par purification dudit résiduaire, dans une seconde boîte froide,

Schéma 2 selon l'invention :
- production d'un mélange de synthèse d'ammoniac et de monoxyde de carbone intégrée, dans une même boîte froide.

Le gaz d'alimentation présente les caractéristiques suivantes :

**Tableau 1**

| Composition | | % molaire |
|---|---|---|
| H₂ | | 75,34 |
| N₂ | | 0,57 |
| CO | | 10,16 |
| CH₄ | | 12,79 |
| C₂H₆ | | 1,14 |
| débit | Nm³/h | 66 480 |
| pression | bar | 20,5 |

Les résultats suivants ont été obtenus :
Energie spécifique de production de 1 Nm³ de monoxyde de carbone :
schéma 1 : 0,29 kW/ Nm³
schéma 2 : 0,07 kW/Nm³, soit environ 4 fois moins.

Le monoxyde de carbone produit présente les caractéristiques suivantes :

**Tableau 2**

| Résiduaire riche en CO | | CO produit | | |
|---|---|---|---|---|
| | | Schéma 1 (connu) | | Schéma 2 (invention) |
| Composition | % mol | Composition | % mol | |
| H₂ | 2,18 | H₂ | < 0,1 | < 0,1 |
| N₂ | 1,48 | N₂ | 3,5 | 3,5 |
| CO | 39,76 | CO | 96,5 | 96,5 |
| CH₄ | 51,95 | CH₄ | < 5 vpm | < 5 vpm |
| C₂H₆ | 4,63 | C₂H₆ | - | - |
| Débit | Nm³/h | | | |
| | 16 370 | 5 442 | | 5 875 |
| Energie | kwh/h | 1578 | | 400 |

## Revendications

1. Procédé de production combinée d'un mélange de synthèse d'ammoniac et de monoxyde de carbone, du type comprenant la production d'un mélange de synthèse d'ammoniac (N₂ + 3H₂) à partir d'une part, d'hydrogène sous haute pression purifié, dans une étape finale, par lavage à l'azote dans une colonne de lavage (61) et d'autre part, d'un courant d'azote à haute pression,
**caractérisé par** les étapes consistant à :
- soutirer une première fraction liquide (51) en cuve de ladite colonne de lavage à l'azote (61), qui est riche en monoxyde de carbone et pauvre en constituants résiduels dont l'azote, l'hydrogène et le méthane, et une seconde fraction liquide (52) à un emplacement intermédiaire entre cuve et tête de ladite colonne de lavage (61), qui est riche en azote et pauvre en monoxyde de carbone,
- purifier, par voie cryogénique, le monoxyde de carbone à partir de ladite première fraction (51) par une première séparation sous moyenne pression dans une colonne de stripage (62) séparant l'hydrogène résiduel en tête, et une seconde distillation sous basse pression dans une colonne de distillation (63) séparant le monoxyde de carbone et l'azote résiduel en tête à partir du mélange de cuve (56) provenant de la première séparation dans la colonne de stripage (62).

2. Procédé selon la revendication 1, **caractérisé en ce qu'**une partie (75) du courant d'azote à haute pression (70) est utilisée comme fluide de cycle d'un cycle frigorifique ouvert assurant les étapes de séparation.

3. Procédé selon la revendication 2, **caractérisé en ce qu'**une partie (71, (72) du courant d'azote à haute pression (70) est refroidie et utilisée pour alimenter des rebouilleurs de cuve (64, 65) respectivement pour les colonnes de stripage (62) et de distillation (63).

4. Procédé selon la revendication 2 ou 3, **caractérisé en ce qu'**une partie (76) du courant d'azote à haute pression (70) est refroidie, détendue et utilisée à basse pression pour refroidir la tête de la colonne (63) de distillation.

5. Procédé selon la revendication 4, **caractérisé en ce que** le courant d'azote basse pression (78) issu du condenseur de tête (66) de la colonne de distillation (63) est comprimé à la pression nécessaire pour la production du mélange de synthèse d'ammoniac et est recyclé comme fluide de cycle du cycle frigorifique ouvert assurant les étapes de séparation.

6. Procédé selon l'une quelconque des revendications précédentes, **caractérisé en ce qu'**une partie du courant d'azote à haute pression (70) est détendue dans une turbine (67) pour contribuer à la production de froid nécessaire aux étapes de séparation.

7. Procédé selon la revendication 1, **caractérisé en ce que** le courant de monoxyde de carbone produit (58) est comprimé et utilisé comme fluide de cycle d'un cycle frigorifique ouvert assurant les étapes de séparation.

8. Procédé selon la revendication 7, **caractérisé en ce que** le courant de monoxyde de carbone comprimé est utilisé pour alimenter des rebouilleurs de cuve (64, 65) respectivement pour les colonnes de stripage (62) et de distillation (63).

9. Procédé selon l'une quelconque des revendications 7 et 8, **caractérisé en ce que** le courant de monoxyde de carbone est détendu et utilisé à basse pression pour refroidir la tête de la colonne de distillation (63).

10. Procédé selon la revendication 9, **caractérisé en ce que** le courant de monoxyde de carbone à basse pression est comprimé et recyclé comme fluide de cycle du cycle frigorifique ouvert assurant les étapes de séparation.

11. Procédé selon l'une quelconque des revendications précédentes, **caractérisé en ce que** l'on produit du monoxyde de carbone (en 58) présentant une pureté d'au moins 98 %.

12. Installation (6) pour la production combinée d'un mélange de synthèse d'ammoniac et de monoxyde de carbone, du type comprenant des moyens cryogéniques de séparation des constituants d'un mélange gazeux contenant essentiellement de l'hydrogène et du monoxyde de carbone ainsi que d'autres constituants dont l'azote et le méthane, dont un échangeur de chaleur (60), une source adaptée pour fournir un courant d'azote à haute pression et une colonne de lavage à l'azote liquide (61), **caractérisé en ce que** :
- la colonne de lavage à l'azote (61) comprend des moyens de soutirage de liquide (51) à un emplacement intermédiaire entre cuve et tête de ladite colonne, et
- l'installation (6) comprend en outre
. une colonne de stripage sous moyenne pression (62) munie de moyens de rebouillage (64), produisant en cuve une fraction liquide (56) riche en monoxyde de carbone et en tête de l'hydrogène (55),
. une conduite munie de moyens de détente (54), pour amener la fraction liquide de cuve (51) de la colonne de lavage à l'azote (61) à ladite colonne de stripage (62),
. une colonne de distillation sous basse pression (63) munie de moyens de rebouillage (65) et d'un condenseur de tête (66), produisant en cuve une fraction riche en méthane et en tête une fraction riche en monoxyde de carbone,
. une conduite munie de moyens de détente (57), pour amener ladite fraction liquide de cuve (56) de la colonne de stripage (62) à un emplacement intermédiaire de la colonne de distillation (63).

13. Installation selon la revendication 12, **caractérisée en ce qu'**elle comporte un cycle frigorifique azote ouvert alimenté par l'azote à haute pression (70) destiné à la production du mélange de synthèse d'ammoniac (80).

14. Installation selon l'une quelconque des revendications 12 et 13, **caractérisé en ce que** les moyens de rebouillage (64, 65) des colonnes de stripage (62) et de distillation (63) comprennent des conduites d'azote à haute pression (71, 72) respectivement reliées au courant d'azote à haute pression (70).

15. Installation selon l'une quelconque des revendications 12 à 14, **caractérisée en ce qu'**elle comporte, pour alimenter la partie basse pression du cycle frigorifique, une conduite d'amenée (76) munie de moyens de détente (77) reliée au courant d'azote à haute pression (70).

16. Installation selon la revendication 12, **caractérisée en ce qu'**elle comporte un cycle frigorifique CO ouvert alimenté par le monoxyde de carbone produit (58) et relié à un compresseur de cycle.

17. Installation selon l'une quelconque des revendications 12 à 16, **caractérisée en ce qu'**elle est intégrée dans un équipement de synthèse d'ammoniac dont les moyens de production du mélange de synthèse (N₂ + 3H₂) comprennent une première unité d'oxydation partielle d'hydrocarbures ou de charbon et une dernière unité de lavage à l'azote, ladite installation constituant la dernière unité de lavage à l'azote.

## Claims

1. Process for the combined production of an ammonia synthesis mixture and carbon monoxide, of the type comprising the production of an ammonia synthesis mixture (N₂ + 3H₂) from, on the one hand, high-pressure hydrogen purified, in a final step, by scrubbing it with nitrogen in a scrubbing column (61) and, on the other hand, a stream of high-pressure nitrogen,
**characterized by** the steps consisting in:
- withdrawing a first liquid fraction (51) from the bottom of the said nitrogen scrubbing column (61), which is rich in carbon monoxide and lean in residual constituents, including nitrogen, hydrogen and methane, and a second liquid fraction (52) at an intermediate position between the bottom and top of the said scrubbing column (61), which is rich in nitrogen and lean in carbon monoxide;
- cryogenically purifying the carbon monoxide from the said first fraction (51) by a first separation under medium pressure in a stripping column (62), separating the residual hydrogen at the top, and a second distillation under low pressure in a distillation column (63), separating the carbon monoxide and the residual nitrogen at the top from the bottoms mixture (56) coming from the first separation in the stripping column (62).

2. Process according to Claim 1, **characterized in that** a portion (75) of the high-pressure nitrogen stream (70) is used as cycle fluid for an open refrigeration cycle effecting the separation steps.

3. Process according to Claim 2, **characterized in that** a portion (71, 72) of the high-pressure nitrogen stream (70) is cooled and used to feed bottom re-boilers (64, 65) for the stripping column (62) and distillation column (63), respectively.

4. Process according to Claim 2 or 3, **characterized in that** a portion (76) of the high-pressure nitrogen stream (70) is cooled, expanded and used at low pressure to cool the top of the distillation column (63).

5. Process according to Claim 4, **characterized in that** the low-pressure nitrogen stream (78) coming from the top condenser (66) of the distillation column (63) is compressed to the pressure needed for the production of the ammonia synthesis mixture and is recycled as cycle fluid for the open refrigeration cycle effecting the separation steps.

6. Process according to any one of the preceding claims, **characterized in that** a portion of the high-pressure nitrogen stream (70) is expanded in a turbine (67) in order to contribute to the refrigeration needed for the separation steps.

7. Process according to Claim 1, **characterized in that** the carbon monoxide stream (58) produced is compressed and used as cycle fluid for an open refrigeration cycle effecting the separation steps.

8. Process according to Claim 7, **characterized in that** the compressed carbon monoxide stream is used to feed bottom re-boilers (64, 65) for the stripping column (62) and the distillation column (63), respectively.

9. Process according to either of Claims 7 and 8, **characterized in that** the carbon monoxide stream is expanded and used at low pressure to cool the top of the distillation column (63).

10. Process according to Claim 9, **characterized in that** the low-pressure carbon monoxide stream is compressed and recycled as cycle fluid for the open refrigeration cycle effecting the separation steps.

11. Process according to any one of the preceding claims, **characterized in that** carbon monoxide having a purity of at least 98% is produced (at 58).

12. Plant (6) for the combined production of an ammonia synthesis mixture and carbon monoxide, of the type comprising cryogenic means for separating the constituents of a gas mixture essentially containing hydrogen and carbon monoxide together with other constituents, including nitrogen and methane, which means include a heat exchanger (60), a source suitable for delivering a high-pressure nitrogen stream and a column (61) for scrubbing with liquid nitrogen, **characterized in that**:
- the nitrogen scrubbing column (61) comprises means for withdrawing liquid (51) at an intermediate position between the bottom and top of the said column; and
- the plant (6) furthermore comprises
. a medium-pressure stripping column (62) provided with re-boiling means (64), producing, as bottoms, a liquid fraction (56) rich in carbon monoxide and, as overhead, hydrogen (55),
. a line provided with expansion means (54), in order to take the liquid fraction (51) from the bottom of the nitrogen scrubbing column (61) to the said stripping column (62),
. a low-pressure distillation column (63) provided with re-boiling means (65) and with a top condenser (66), producing, as bottoms, a fraction rich in methane and, as overhead, a fraction rich in carbon monoxide, and
. a line provided with expansion means (57), in order to take the said liquid fraction (56) from the bottom of the stripping column (62) to an intermediate position in the distillation column (63).

13. Plant according to Claim 12, **characterized in that** it includes an open nitrogen refrigeration cycle fed with high-pressure nitrogen (70) intended for the production of the ammonia synthesis mixture (80).

14. Plant according to either of Claims 12 and 13, **characterized in that** the re-boiling means (64, 65) of the stripping column (62) and distillation column (63) include high-pressure nitrogen lines (71, 72) respectively connected to the high-pressure nitrogen stream (70).

15. Plant according to any one of Claims 12 to 14, **characterized in that** it includes, for feeding the low-pressure part of the refrigeration cycle, a feed line (76) provided with expansion means (77) connected to the high-pressure nitrogen stream (70).

16. Plant according to Claim 12, **characterized in that** it includes an open CO refrigeration cycle fed with the carbon monoxide produced (at 58) and connected to a cycle compressor.

17. Plant according to any one of Claims 12 to 16, **characterized in that** it is integrated into an ammonia synthesis apparatus, the synthesis mixture (N₂ + 3H₂) production means of which comprise a first unit for the partial oxidation of hydrocarbons or coal and a second unit for scrubbing with nitrogen, the said plant constituting the final unit for scrubbing with nitrogen.

## Patentansprüche

1. Verfahren zur kombinierten Herstellung von Ammoniaksynthesegemisch und Kohlenmonoxid, wobei aus in einem letzten Schritt durch Waschen mit Stickstoff in einer Waschsäule (61) gereinigtem Hochdruckwasserstoff und einem Hochdruckstickstoffstrom ein Ammoniaksynthesegemisch (N₂ + 3H₂) hergestellt wird,
**dadurch gekennzeichnet, daß** man:
- aus dem Sumpf der Stickstoffwaschsäule (61) eine erste flüssige Fraktion (51), die kohlenmonoxidreich und arm an Restbestandteilen einschließlich Stickstoff, Wasserstoff und Methan ist, und an einer Zwischenstelle zwischen dem Sumpf und dem Kopf der Waschsäule (61) eine zweite flüssige Fraktion (52), die stickstoffreich und kohlenmonoxidarm ist, abzieht,
- das Kohlenmonoxid aus der ersten Fraktion (51) auf kryogenem Wege reinigt, indem man eine erste Mitteldruck-Trennung in einer Strippsäule (62), in der der Restwasserstoff am Kopf abgetrennt wird, und eine zweite Niederdruck-Destillation in einer Destillationssäule (63), in der das Kohlenmonoxid und der Reststickstoff aus dem von der ersten Trennung in der Strippsäule (62) kommenden Sumpfgemisch (56) am Kopf abgetrennt werden, durchführt.

2. Verfahren nach Anspruch 1, **dadurch gekennzeichnet, daß** man einen Teil (75) des Hochdruckstickstoffstroms (70) als Kreislaufflüssigkeit für einen die Trennschritte gewährleistenden offenen Kältekreislauf verwendet.

3. Verfahren nach Anspruch 2, **dadurch gekennzeichnet, daß** man einen Teil (71, 72) des Hochdruckstickstoffstroms (70) abkühlt und zur Speisung der Sumpfverdampfer (64, 65) für die Strippsäule (62) bzw. die Destillationssäule (63) verwendet.

4. Verfahren nach Anspruch 2 oder 3, **dadurch gekennzeichnet, daß** man einen Teil (76) des Hochdruckstickstoffstroms (70) abkühlt, entspannt und bei niedrigem Druck zum Kühlen des Kopfes der Destillationssäule (63) verwendet.

5. Verfahren nach Anspruch 4, **dadurch gekennzeichnet, daß** man den vom Kopfkondensator (66) der Destillationssäule (63) kommenden Niederdruckstickstoffstrom (78) auf den zur Herstellung des Ammoniaksynthesegemischs erforderlichen Druck verdichtet und als Kreislaufflüssigkeit für den die Trennschritte gewährleistenden offenen Kältekreislauf wiederverwendet.

6. Verfahren nach einem der vorhergehenden Ansprüche, **dadurch gekennzeichnet, daß** man einen Teil des Hochdruckstickstoffstroms (70) in einer Turbine (67) entspannt und dadurch zur Erzeugung der für die Trennschritte benötigten Kälte beiträgt.

7. Verfahren nach Anspruch 1, **dadurch gekennzeichnet, daß** man den anfallenden Kohlenmonoxidstrom (58) verdichtet und als Kreislaufflüssigkeit für einen die Trennschritte gewährleistenden offenen Kältekreislauf verwendet.

8. Verfahren nach Anspruch 7, **dadurch gekennzeichnet, daß** man den verdichteten Kohlenmonoxidstrom zur Speisung der Sumpfverdampfer (64, 65) für die Strippsäule (62) bzw. die Destillationssäule (63) verwendet.

9. Verfahren nach Anspruch 7 oder 8, **dadurch gekennzeichnet, daß** man den Kohlenmonoxidstrom entspannt und bei niedrigem Druck zum Kühlen des Kopfes der Destillationssäule (63) verwendet.

10. Verfahren nach Anspruch 9, **dadurch gekennzeichnet, daß** man den Niederdruckkohlenmonoxidstrom verdichtet und als Kreislaufflüssigkeit für den die Trennschritte gewährleistenden offenen Kältekreislauf wiederverwendet.

11. Verfahren nach einem der vorhergehenden Ansprüche, **dadurch gekennzeichnet, daß** man dabei Kohlenmonoxid (bei 58) mit einer Reinheit von mindestens 98% erhält.

12. Vorrichtung (6) zur kombinierten Herstellung von Ammoniaksynthesegemisch und Kohlenmonoxid mit kryogenen Einrichtungen zur Trennung der Bestandteile eines im wesentlichen Wasserstoff und Kohlenmonoxid sowie andere Bestandteile einschließlich Stickstoff und Methan enthaltenden Gasgemischs einschließlich eines Wärmetauschers (60), einer zur Lieferung eines Hochdruckstickstoffstroms ausgelegten Quelle und einer Flüssigstickstoffwaschsäule (61), **dadurch gekennzeichnet, daß**:
- die Stickstoffwaschsäule (61) Einrichtungen zum Abziehen von Flüssigkeit (51) an einer Zwischenstelle zwischen dem Sumpf und dem Kopf der Säule aufweist und
- die Vorrichtung (6) außerdem auch noch
eine mit Verdampfungseinrichtungen (64) ausgestattete Mitteldruck-Strippsäule (62), in der im Sumpf eine kohlenmonoxidreiche flüssige Fraktion (56) und am Kopf Wasserstoff (55) anfällt,
eine mit Entspannungseinrichtungen (54) ausgestattete Leitung zum Zuführen der flüssigen Sumpffraktion (51) der Stickstoffwaschsäule (61) zu der Strippsäule (62),
eine mit Verdampfungseinrichtungen (65) und einem Kopfkondensator (66) ausgestattete Niederdruck-Destillationssäule (63), in der im Sumpf eine methanreiche Fraktion und am Kopf eine kohlenmonoxidreiche Fraktion anfällt, und
eine mit Entspannungseinrichtungen (57) ausgestattete Leitung zum Zuführen der flüssigen Sumpffraktion (56) der Strippsäule (62) zu einer Zwischenstelle der Destillationssäule (63)
aufweist.

13. Vorrichtung nach Anspruch 12, **dadurch gekennzeichnet, daß** sie einen offenen Stickstoffkältekreislauf aufweist, der mit Hochdruckstickstoff (70), der für die Herstellung des Ammoniaksynthesegemischs (80) vorgesehen ist, gespeist wird.

14. Vorrichtung nach Anspruch 12 oder 13, **dadurch gekennzeichnet, daß** die Verdampfungseinrichtungen (64, 65) der Strippsäule (62) und der Destillationssäule (63) jeweils mit dem Hochdruckstickstoffstrom (70) verbundene Hochdruckstickstoffleitungen (71, 72) aufweisen.

15. Vorrichtung nach einem der Ansprüche 12 bis 14, **dadurch gekennzeichnet, daß** sie zur Speisung des Niederdruckteils des Kältekreislaufs eine mit Entspannungseinrichtungen (77) ausgestattete, mit dem Hochdruckstickstoffstrom (70) verbundene Zufuhrleitung (76) aufweist.

16. Vorrichtung nach Anspruch 12, **dadurch gekennzeichnet, daß** sie einen offenen CO-Kältekreislauf aufweist, der mit anfallendem Kohlenmonoxid (58) gespeist und mit einem Kreislaufverdichter verbunden ist.

17. Vorrichtung nach einem der Ansprüche 12 bis 16, **dadurch gekennzeichnet, daß** sie in eine Ammoniaksyntheseanlage integriert ist, zu deren Einrichtungen zur Herstellung des Synthesegemischs (N₂ + 3H₂) eine erste Einheit zur Teiloxidation von Kohlenwasserstoffen oder Kohlenstoff und eine letzte Einheit zum Waschen mit Stickstoff gehören, wobei die Vorrichtung die letzte Einheit zum Waschen mit Stickstoff bildet.
